# EUROPÄISCHE PATENTANMELDUNG

(11) **EP 2 484 652 A1**
(43) Veröffentlichungstag der Anmeldung: **08.08.2012**
(21) Anmeldenummer: 11153285.9
(22) Anmeldetag: 04.02.2011
(51) Int. Cl.: C04B 35/14, C04B 35/18

(54) **Feuerfeste Spritzmasse**

(71) Anmelder: Georg Fischer GmbH & Co. KG, 40822 Mettmann (DE)
(72) Erfinder: Kutsch, Thorsten, 46539, Dinslaken (DE)
(74) Vertreter: De Colle, Piergiacomo

(57) **Zusammenfassung**

Spritzmasse geeignet zur feuerfesten Auskleidung eines geschmolzenes Roheisen enthaltendes Behältnisses für die Giessereiindustrie, insbesondere metallurgische Gefässe, wobei die Spritzmasse Giessereialtsand enthält.

## Beschreibung

Die Erfindung betrifft eine Spritzmasse geeignet zur feuerfesten Auskleidung eines geschmolzenes Roheisen enthaltendes Behältnisses für die Giessereiindustrie, insbesondere metallurgische Gefässe.

In der Eisen-, Stahl- und Giessindustrie werden feuerfeste Materialien bspw. zur Auskleidung von Kupolöfen eingesetzt, zudem finden sie auch Anwendung als Schutzschicht für Schlackepfannen in denen die während des Giessprozesses entstandene Schlacke gesammelt und daraufhin entsorgt wird, sowie auch zur feuerfesten Auskleidung von anderen Behältnissen der Giesserei. Man unterscheidet zur Auskleidung bzw. Beschichtung unterschiedliche Arten der aufzutragenden Schicht, somit kann eine feuerfeste Auskleidung mittels einer Stampfmasse, welche unter Druck verdichtet wird und anschliessend auf die vorbereite Innenwand des Kupolofens aufgetragen wird, gebildet werden. Eine weitere Ausführungsform von feuerfesten Auskleidungen ist die Giessmasse, das Aufbringen der Auskleidung findet durch Giessen statt indem die Masse in eine Verschalung gefüllt wird. Eine der einfacheren Auftragemöglichkeiten ist das Spritzen, bei dem eine Spritzmasse auf die zu beschichtenden Oberflächen gesprüht wird. Das feuerfeste Material verhindert ein Verkleben bzw. Anbacken an der Schlackepfanne und der Reinigungsaufwand wird dadurch erheblich verringert. Durch die Entleerung der Schlackepfanne wird somit auch die Schutzschicht zerstört und muss vor dem erneuten Einsatz wieder aufgebracht werden. Bei Kupolöfen muss rund jeden zweiten Tag die Innenauskleidung, welche durch feuerfestes Material gebildet wird, revidiert bzw. erneuert werden. Da die Auskleidung des Kupolofens sowie die Beschichtung der Schlackepfanne einem solch grossen Verschleiss unterworfen sind, wird ein möglichst günstiges Material zur Herstellung einer Beschichtung angestrebt. In der Regel wird dazu Klebsand, der ein natürliches Vorkommen aufweist, dafür eingesetzt. Klebsand wird im Tagbau abgebaut und setzt sich aus den Bestandteilen Sand und Ton bzw. Kaolin zusammen. Damit er als feuerfestes Material einsetzbar ist, wird er nach dem Abbau getrocknet und anschliessend gesiebt.

Die DE 10 2006 040 700 A1 beschreibt ein Verfahren zur Herstellung von kohlenstoffhaltigen feuerfesten Klebsand-Erzeugnissen durch Pressformgebung, wobei eine Mischung aus Klebsand und mindestens einem später graphitisierbaren Kohlenstoffträger über Pressen zu Erzeugnissen geformt werden.

Die Pressmasse weist als Hauptbestandteil bzw. ausschliesslichen Bestandteil Klebsand auf. Klebsand, bedingt durch sein natürliches Vorkommen, einen ungleichmässigen Kornaufbau. Das Korn des Klebsands weist splittrige Konturen auf, wodurch auch nach einem Siebvorgang keine einheitliche Grösse bzw. Oberfläche der Körner auftreten. Zudem ist die Staubbildung bei Spritzmassen aus Klebsand enorm hoch. Ein weiterer Nachteil der klebsandhaltigen Spritzmasse ist, dass durch das natürliche Vorkommen die Zusammensetzung der einzelnen Elemente immer anders ausfällt und die Masse keine konstant gleiche Zusammensetzung aufweist, was ein vorkalkuliertes Arbeiten verunmöglicht.

Die DE 35 37 412 A1 offenbart eine feuerfeste Spritzmasse bei der ein feuerfestes feinpulvriges Gemisch und ein feuerfestes zuvor aufgeschlämmtes Feinstpulver bspw. Kaolin gemischt werden, wobei dem Gemisch ein Verflüssigungsmittel wie bspw. Formaldehydaddukt von Naphthalinsulfonsäure beigemengt wird sowie ein Härtebeschleuniger.

Nachteilig an einer solchen Masse ist, dass sie in ihrer Herstellung durch das Aufschlämmen und Zusammenmischen der einzelnen Bestandteile sehr aufwendig ist, zudem nutzt sie keine vorhandenen Materialien die während des Giessprozesses anfallen und ist daher eine sehr kostenintensive Lösung.

Es ist Aufgabe der Erfindung eine Spritzmasse zu enfwickeln, die günstig herstellbar ist, die sich optimal zur Auskleidung von Behältnissen in der Giessereiindustrie eignet und die anteilsmässige Zusammensetzung der Bestandteile der Masse bei jeder Charge konstant gleich ausfällt.

Diese Aufgabe wird erfindungsgemäss dadurch gelöst, dass die Spritzmasse Giessereialtsand aufweist. In Giessereien, die das Verfahren der verlorenen Form anwenden, werden die Giessformen aus Giessereisand hergestellt. Nach dem Ausformen des Gussteils zerfällt die Sandform und der Sand ist nur bedingt wieder verwendbar. Dadurch fällt eine grosse Menge an Giessereialtsand an, den es gilt wenn möglich weiter zu verwerten. Um Giessereisand mehrfach zu verwenden, wird der Altsand gereinigt und kann zu einem gewissen Teil wieder als Formsand eingesetzt werden indem er mit frischem Giessereisand vermengt wird. Durch die neu entwickelte Spritzmasse findet nun der anfallende Altsand auch Anwendung in Spritzmassen, wodurch ein weiterer Teil des Altsands weiter verwendet werden kann. Dadurch verringert sich entsprechend der zu entsorgende Anteil an Altsand, somit können auch bei der Entsorgung des Giessereialtsands Kosten eingespart werden. Des Weiteren ist der ökologische Aspekt nicht ausser Acht zu lassen.

Die Giessereialtsand beinhaltende Spritzmasse ist zur feuerfesten Auskleidung von Behältnissen für geschmolzenes Roheisen insbesondere für Kupolöfen oder Schlackepfannen durch ihre technischen und wirtschaftlichen Eigenschaften ideal. Wie schon eingangs erwähnt ist eine solche feuerfeste Beschichtung sehr grossem Verschleiss unterworfen, wodurch eine entsprechende Menge an Spritzmasse benötigt wird, um die Behältnisse feuerfest auszukleiden. Durch den Einsatz von Giessereialtsand als Spritzmasse kann auf teuer zugekaufte Materialien verzichtet werden und es verringert sich zudem die Menge des zu entsorgenden Altsands und dadurch auch die Entsorgungskosten.

Dadurch dass das Korn der Spritzmasse aus Giessereialtsand gröber ist als welches der Spritzmassen die aus Klebsand hergestellt sind, die bisher meist zum Einsatz kamen, ist die Staubentwicklung wesentlich geringer was sich beim Verarbeiten des Altsands und Aufbringen der feuerfesten Auskleidung sehr positiv auswirkt, da der anfallende Staub hinderlich beim Arbeiten ist. Der Grund für die geringere Staubbildung ist unter anderem der, dass der Kornaufbau bzw. der Körper des Korns der Altsandspritzmasse regelmässiger ausfällt als der Kornaufbau der Klebsandspritzmasse, das heisst, das Korn ist runder und kompakter aufgebaut und dasjenige des Klebsands welches durch sein natürliches Vorkommen bedingt kantig und splittrig ausfällt. Zudem verfügt die Altsandspritzmasse über einen wesentlich höheren Feuchtigkeitsgehalt. Durch den gleichmässigen, kompakten Kornaufbau des Altsandkorns verläuft zudem der Trocknungsprozess der aufgespritzten Spritzmasse sehr regelmässig, was wiederum das Risiko von Spannungen in der Auskleidung sowie die Rissbildung verringert. Des Weiteren verringert sich die Trocknungszeit der Spritzmasse, was sich positiv auf die Wirtschaftlichkeit des Giessereibetriebs auswirkt, was ebenfalls durch den gleichmässigen Kornaufbau hervor gerufen wird. Behältnisse mit einer Beschichtung bzw. Auskleidung aus einer Altsandspritzmasse können wesentlich früher wieder in Betrieb genommen werden als Klebsand aufweisende Spritzmassen.

Des Weiteren ist von Vorteil, wenn die Spritzmasse eine Konstanz in ihren Bestandteilen und ihrer anteilsmässigen Verteilung der Bestandteile aufweist, die im Fall der vorliegenden Erfindung dadurch gegeben ist, dass der Altsand bzw. der Giessereisand einer ständigen Gütekontrolle unterliegt und somit der auch nach dem Giessprozess entstandene Altsand davon profitiert indem die Korngrössenverteilung einheitlich ausfällt sowie die Zusammensetzung der Bestandteile vordefiniert ist. Das heisst, dass ein hoher Protzentsatz der Körner in einem engen Korngrössenbereich liegt. Rund 60% des Altsandkorns liegen im Bereich von 0.18 ― 0.5mm, im Vergleich dazu liegen nur rund 45% des Klebsandkorns in diesem Bereich, wodurch das Vorkommen sehr unterschiedlicher Grössen der Körner im Klebsand um einiges höher ist, was wiederum eine schlecht kalkulierbare Trocknungszeit zur Folge hat, mal abgesehen von dem höheren Risiko der Rissbildung. Durch die einheitliche Korngrössenverteilung ergeben sich, ohne jeglichen zusätzlichen Aufwand, sehr gute Verarbeitungseigenschaften, wie auch ein gleichmässiges Erscheinungsbild und eine saubere Oberfläche der Auskleidungen.

Dadurch dass der Altsand Bentonit enthält, da dieser schon während des Giessvorgangs im Giessereisand benötigt wird, um die Formfestigkeit zu gewährleisten, ist kein zusätzliches Bindemittel notwendig. Durch Bentonit als Bindemittel ist die Festigkeit im Vergleich zu Auskleidungen, die Kaolin als Bindemittel einsetzen höher, was für eine Auskleidung nur von Vorteil ist, da dadurch der Verschleiss verringert wird.

Ein weiterer Vorteil der Spritzmasse aus Altsand besteht darin, dass schon der Giessereisand aus verschiedenen Bestandteilen bzw. Rohstoffen spezifisch zusammengemischt wird, was auch hier dem Altsand, der automatisch nach dem Giessvorgang entsteht, zugute kommt und dadurch das Mischverhältnis konstant immer gleich ist. So weist die Spritzmasse aus Altsand immer dieselbe Zusammensetzung mit den identischen Rohstoffanteilen auf. Wodurch der Trocknungsprozess sowie die Verarbeitung der Masse kalkulierbar sind. Bei einem Naturprodukt wie Klebsand, der nie dieselbe Zusammensetzung aufweist, tritt kein konstantes Verhalten zu Tage, weshalb die Trocknungszeiten immer unterschiedlich ausfallen. Was bei einem Giessereibetrieb, um eine optimale Effizienz zu erzielen sehr, störend ist.

Die Erfindung zeichnet sich zusätzlich dadurch aus, dass der Kohlenstoffanteil der Spritzmasse zwischen 2 und 5 Gew.-% liegt, deutlich über den bisher bekannten Spritzmassen. Durch den hohen Kohlenstoffanteil wird die Feuerfestigkeit der Auskleidung bzw. Schutzschicht, die durch die Spritzmasse erzeugt wird, erhöht. Durch das kohlenstoffhaltige Material der Altsandspritzmasse weist die Masse exzellente mechanische, thermische und chemische Eigenschaften auf, die der Kohlenstoff mit sich bringt, woraus eine schlechte Benetzbarkeit durch Schlacken-und Metallschmelzen, verbunden mit chemischen Resistenzen gegenüber einer Vielzahl aggressiver Medien, sowie der hervorragenden Temperaturbeständigkeit resultiert.

Der SiO₂-Anteil liegt zwischen 83 und 87 Gew.-%, des Weiteren besteht die Spritzmasse aus 3,5 bis 4,5 Gew.-% Al₂O₃ und 1,5 bis 6,5 Gew.-% Fe₂O₃. Der hohe Oxidanteil beeinflusst die Beständigkeit der Spritzmasse positiv.

Zur Erhöhung der feuerfesten Eigenschaften, zu denen unter anderem Stabilität, Steifigkeit, Brandschutz wie auch Feuerwiderstand gehören, besteht die Möglichkeit ein Oxid beizumischen, beispielsweise Al₂O₃, MgO oder auch TiO₂.

Eine bevorzugte Mischung der Spritzmasse weist eine Zugabe von Kohlenstoffpulver auf, welches die Fliessfähigkeit der Altsandspritzmasse verbessert bzw. optimiert, um die Verarbeitungseigenschaften zu verbessern.

Durch die Zugabe von Stärke wird die Speicherfähigkeit von Wasser der Spritzmasse erhöht, wodurch sich die Spritzmasse besser auftragen lässt und die Verarbeitung vereinfacht wird.

Der Feuchtigkeitsgehalt der Spritzmasse aus Altsand im spritzfertigen Zustand liegt zwischen 2,5 und 8,0 Gew.-% an Wassergehalt, was ein Mehrfaches höher ist als der Feuchtigkeitsgehalt des Klebsands der zwischen 1,0 und 3,0 Gew.-% liegt. Dieser hohe Feuchtigkeitsgehalt wird ohne ein Beimischen von zusätzlicher Flüssigkeit erzielt, der Altsand selbst trägt hauptsächlich zu einem solch hohen Feuchtigkeitsgehalt der insbesondere aus Wasser besteht bei.

Dadurch dass der Feuchtigkeitsgehalt bei der Klebsandspritzmasse um einiges geringer ist als bei der Spritzmasse, der vorliegenden Erfindung, ist die Staubentwicklung beim Klebsand um ein vielfaches höher, was das Aufspritzen der Masse bzw. das Verarbeiten des Klebsands zur Spritzmasse wesentlich erschwert. Die Möglichkeit den Klebsand mehr anzufeuchten und den Feuchtigkeitsgehalt des Klebsands auf dasselbe Niveau der Altsandspritzmasse anzuheben besteht deshalb nicht, da durch die Erhöhung des Feuchtigkeitsgehalts im Klebsand eine geringere Haftung der Spritzmasse an den bspw. Kupolofenwänden sowie auch eine geringere Packungsdichte des haftenden Materials hervor gerufen wird und dadurch eine komplette Auskleidung durch eine Klebsandspritzmasse mit einem erhöhten Feuchtigkeitsgehalt kaum realisierbar ist.

Die Spritzmasse dient zur feuerfesten Auskleidung von Behältnissen in Giessereien die geschmolzenes Roheisen enthalten, unter anderem werden auch Kupolöfen mit dieser Spritzmasse ausgekleidet sowie auch Schlackepfannen damit beschichtet werden, um das Anbacken bzw. Verkleben der Schlacke in der Pfanne zu vermeiden und denn Reinigungsaufwand zu minimieren.

Als spezielle Ausführungsform einer Schlackepfanne wird eine ausgediente Badewanne aus Stahl eingesetzt. Sie erfüllt alle Anforderungen, die eine Schlackepfanne haben muss und ist günstig wenn nicht sogar kostenlos zu erstehen. Zudem wird der Gedanke der Weiterverwertung auch in diesem Bereich gelebt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Auflistung der einzelnen Bestandteile der Spritzmasse aus Giessereialtsand und Klebsand in Gewichtsprotzenten normiert auf 100 und
- Fig. 2: ein Diagramm einer Siebanalyse der beiden Spritzmassen.

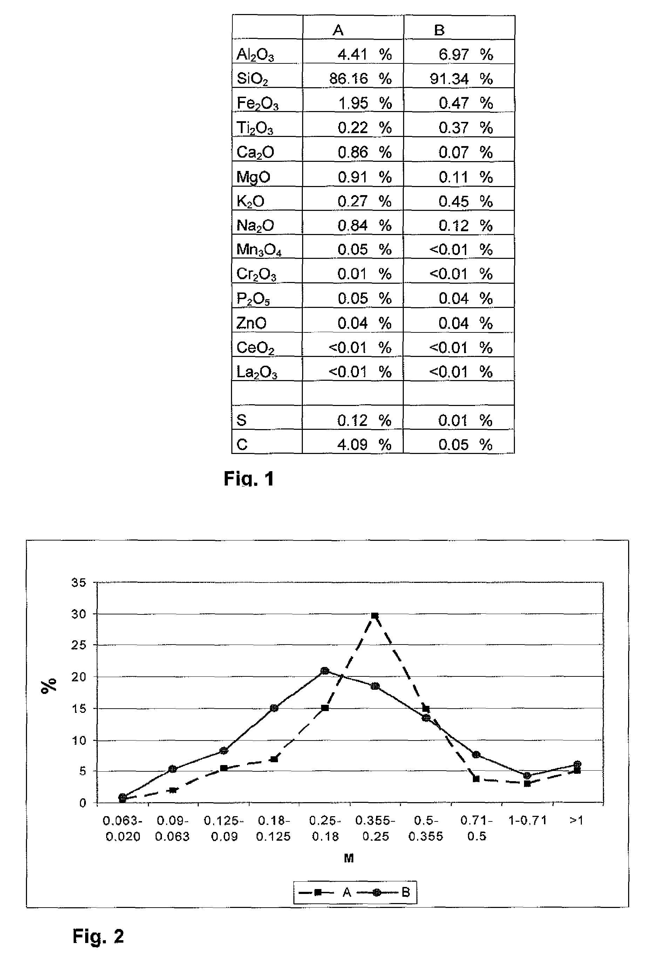

Spalte A in Fig. 1 zeigt die Bestandteile der vorliegenden Erfindung, der aus Giessereialtsand hergestellten Spritzmasse. Im Vergleich dazu ist in Spalte B die Spritzmasse aus Klebsand aufgeführt, die bisher im Normalfall zur feuerfesten Auskleidung von Kupolöfen wie auch Schlackepfannen verwendet wurde. Aus der Tabelle ist klar ersichtlich, dass der Kohlenstoffanteil in der Spalte A bzw. bei der Altsandspritzmasse um ein vielfaches höher ist als bei der zum Stand der Technik gehörenden Spritzmasse aus Klebsand, die in Spalte B aufgeführt ist. Das wiederum verschafft der Spritzmasse aus Giessereialtsand die exzellenten Eigenschaften für den Einsatz als feuerfeste Spritzmasse, die zuvor schon erwähnt wurden.

Fig. 2 stellt die Verteilung der Korngrössen der beiden Spritzmassen dar. Mittels einer Siebanalyse wurden die unterschiedlichen Korngrössen in den Spritzmassen ermittelt und prozentual aufgeführt.

Entlang der Abszisse sind die Bereiche der Maschenweiten (M) der Siebe in mm festgehalten, bspw. beinhaltet der erste Bereich der Abszisse die Maschenweiten (M) von 0.020-0.063 mm. Somit wird der prozentuale Anteil der Körner, die in dieses Spektrum fallen im ersten Bereich aufgeführt, was bei beiden Massen unterhalb von 1 Gew.-% liegt, wie aus Fig. 2 ersichtlich ist. Kurve A zeigt die Siebanalyse der Spritzmasse aus Altsand, woraus gut ersichtlich ist, dass die Hauptansammlung der Korngrössen im Bereich von 0.18-0.5mm liegt. Kurve B zeigt die Werte einer Spritzmasse aus Klebsand, im Vergleich mit Kurve A ist klar erkennbar, dass die Korngrössenverteilung der kurve B über einen grösseren Bereich statt findet und keine eindeutige Häufung der Korngrössen erkennbar ist, wie das in Kurve A bzw. der Altsandspritzmasse der Fall ist.

Durch die einheitliche Korngrösse in Spritzmasse A, die bereits durch die Herstellung des Giessereisands erzielt wird und dadurch dem Giessereialtsand ohne jeglichen Zusatzaufwand mitgegeben ist, wird eine bessere Qualität der feuerfesten Auskleidung sowie eine wirtschaftliche Verbesserung erzielt.

### Bezugszeichenliste

- A: Spritzmasse aus Altsand (vorliegende Erfindung)
- B: Spritzmasse Klebsand
- M: Maschenweiten

## Patentansprüche

1. Spritzmasse geeignet zur feuerfesten Auskleidung eines geschmolzenes Roheisen enthaltendes Behältnisses für die Giessereiindustrie, insbesondere metallurgische Gefässe, **dadurch gekennzeichnet, dass** die Spritzmasse Giessereialtsand enthält.

2. Spritzmasse nach Anspruch 1, **dadurch gekennzeichnet, dass** die Spritzmasse als Bindemittel Bentonit aufweist.

3. Spritzmasse nach einem der Ansprüche 1 oder 2, **dadurch gekennzeichnet, dass** der Kohlenstoffanteil der Spritzmasse zwischen 2 und 5 Gew.-% liegt.

4. Spritzmasse nach einem der Ansprüche 1 bis 3, **dadurch gekennzeichnet, dass** der SiO₂-Anteil der Spritzmasse zwischen 83 und 87 Gew.-% liegt.

5. Spritzmasse nach einem der Ansprüche 1 bis 4, **dadurch gekennzeichnet, dass** in der Spritzmasse der Al₂O₃-Anteil zwischen 3,5 und 4,5 Gew.-% und der Fe₂O₃-Anteil zwischen 1,5 und 6,5 Gew.-% liegt.

6. Spritzmasse nach einem der Ansprüche 1 bis 5, **dadurch gekennzeichnet, dass** der Spritzmasse ein Oxid beigemischt ist, insbesondere MgO, TiO₂ oder AlO₃.

7. Spritzmasse nach einem der Ansprüche 1 bis 6, **dadurch gekennzeichnet, dass** der Spritzmasse Kohlenstoffpulver beigefügt ist.

8. Spritzmasse nach einem der Ansprüche 1 bis 7, **dadurch gekennzeichnet, dass** der Spritzmasse Stärke beigefügt ist.

9. Spritzmasse nach einem der Ansprüche 1 bis 8, **dadurch gekennzeichnet, dass** der Feuchtigkeitsgehalt der spritzfertigen Spritzmasse einen Wassergehalt von 2,5 - 8,0 Gew.-% aufweist.

10. Spritzmasse nach einem der Ansprüche 1 bis 9, **dadurch gekennzeichnet, dass** das Behältnis ein Kupolofen ist.

11. Spritzmasse nach einem der Ansprüche 1 bis 10, **dadurch gekennzeichnet, dass** das Behältnis eine Schlackepfanne ist.

12. Spritzmasse nach Anspruch 11, **dadurch gekennzeichnet dass** die Schlackepfanne eine Badewanne ist.
